# EUROPÄISCHE PATENTANMELDUNG

(11) **EP 2 182 594 A1**
(43) Veröffentlichungstag der Anmeldung: **05.05.2010**
(21) Anmeldenummer: 08019171.1
(22) Anmeldetag: 03.11.2008
(51) Int. Cl.: H01R 35/04

(54) **Elektrische Verbindungseinrichtung**

(71) Anmelder: Delphi Technologies, Inc., Troy, Michigan 48007 (US)
(72) Erfinder: Le Solleu, Jean-Pierre, 67000 Strasbourg (FR); Hassan, Bahman, 67400 Illkirch (FR); Kürschner, Sven, 55597 Wöllstein (DE)
(74) Vertreter: Becker, Bernd

(57) **Zusammenfassung**

Eine Elektrische Verbindungseinrichtung zwischen einem Lenkrad und einem Lenkstockschaltermodul eines Kraftfahrzeuges umfasst ein Gehäuse mit zwei relativ zueinander verdrehbaren Gehäuseteilen (1, 2), von denen eines mit einem das Gehäuse verschließenden Deckel (3) fest verbunden ist, mindestens einen spiralförmig mit einem richtungsumkehrenden Abschnitt (7a) im Gehäuse aufgewickelten, endseitig mit Anschlusseinheiten (15, 24) verbundenen flexiblen elektrischen Leiter (7) mit einer Markierung und einem Sichtfenster (16) im Deckel (3) zur Sichtung der Markierung des Leiters (7) zum Erkennen einer Neutralposition der Gehäuseteile (1, 2). Es sind Mittel (7a, 8a, 9a, 10a, 19, 20, 21, 22) vorgesehen, die eine optische Erkennung mindestens einer Umdrehung der beiden Gehäuseteile (1, 2) relativ zueinander in mindestens einer Richtung ermöglichen.

## Beschreibung

Die Erfindung bezieht sich auf eine elektrische Verbindungseinrichtung zwischen einem Lenkrad und einem Lenkstockschaltermodul eines Kraftfahrzeuges, umfassend ein Gehäuse mit zwei relativ zueinander verdrehbaren Gehäuseteilen, von denen eines mit einem das Gehäuse verschließenden Deckel fest verbunden ist, mindestens einen spiralförmig mit einem richtungsumkehrenden Abschnitt im Gehäuse aufgewickelten, endseitig mit Anschlusseinheiten verbundenen flexiblen elektrischen Leiter mit einer Markierung und ein Sichtfenster im Deckel zur Sichtung der Markierung des Leiters zum Erkennen einer Neutralposition der Gehäuseteile.

Verbindungseinrichtungen dieser Art werden zur Herstellung elektrischer Verbindungen zwischen einer Stromquelle und einer in der Lenkradschüssel angeordneten Gas-Aufprall-Schutzeinrichtung oder Lenkradschaltern von Kraftfahrzeugen eingesetzt. Hierbei weist ein zwischen einem Statorteil und einem dazu verdrehbaren Rotorteil angeordneter flexibler elektrischer Leiter eine solche Länge auf, dass er dem beidseitig etwa drei Umdrehungen betragenden Lenkausschlag zu folgen vermag, wobei sich der Leiter während des Lenkradausschlages aus einer mittleren Lage in der einen Richtung bis zur Anlage an dem Statorteil nach außen aufweitet und in der anderen Richtung bis zur Anlage an dem Rotorteil nach innen zusammenzieht.

Aus der DE 10 2007 024 167 A1 ist eine elektrische Verbindungseinrichtung bekannt, die Mittel aufweist, die eine eindeutige Identifizierung der Neutralposition der beiden zueinander verdrehbaren Gehäuseteile, also des in der Einbausituation im Kraftfahrzeug drehbaren Gehäuseteiles zum feststehenden Gehäuseteil, ermöglichen. Zur Erkennung der Neutralposition ist der elektrische Leiter mit einer Markierung versehen und ein das Gehäuse verschließender Deckel weist ein Sichtfenster auf, in dem die Markierung des Leiters erscheint, wenn sich die relativ zueinander verdrehbaren Gehäuseteile im Neutralzustand befinden. Als Neutralzustand wird der Betriebszustand bezeichnet, in dem die Anzahl der möglichen Drehungen des einen Gehäuseteiles zu dem anderen Gehäuseteil in einer ersten Richtung bzw. im Uhrzeigersinn dieselbe ist, wie die Anzahl der möglichen Drehungen in einer zweiten Richtung bzw. im Gegenuhrzeigersinn. Der Neutralzustand wird in der Regel beim Hersteller einer derartigen elektrischen Verbindungseinrichtung eingestellt.

Während des Einsatzes der Verbindungseinrichtung können jedoch, beispielsweise bei Reparaturen, Fälle eintreten, in denen die Verbindungseinrichtung ausgebaut werden muss und es erforderlich ist, zu erkennen, ob vor der erneuten Montage der Verbindungseinrichtung das eine Gehäuseteile gegenüber dem anderen Gehäuseteil verdreht wurde oder nicht.

Es ist Aufgabe der Erfindung, eine elektrische Verbindungseinrichtung der eingangs genannten Art zu schaffen, bei der eine unproblematische Erkennung der Verdrehung der beiden Gehäuseteile sowie eine Einstellung in die Neutralposition möglich ist.

Erfindungsgemäß wird die Aufgabe dadurch gelöst, dass Mittel vorgesehen sind, die eine optische Erkennung mindestens einer Umdrehung der beiden Gehäuseteile relativ zueinander in mindestens einer Richtung ermöglichen.

Da ein Monteur durch diese Maßnahme die relative Verdrehung der beiden Gehäuseteile um eine Umdrehung optisch erkennen kann, ist er in der Lage schnell und ohne eine mögliche Beschädigung der Leiter die Gehäuseteile in ihre Neutralposition zu bringen, in der ein Einbau in das Kraftfahrzeug möglich ist. Bei den Mitteln kann es sich beispielsweise um einen transparenten Deckel oder einen Deckel mit einem großflächigen Sichtfenster und entsprechenden Markierungen handeln.

Bei einer vorteilhaften Weiterbildung sind die Mittel für jeweils zwei Umdrehungen in zwei entgegengesetzten Richtungen vorgesehen. Da in der Regel aufgrund der Länge des Leiters nur drei Umdrehungen zwischen den beiden Gehäuseteilen möglich sind, ist ein Monteur über die relative Stellung der beiden Gehäuseteile informiert. Neben der Neutralposition sind eine Umdrehung und zwei Umdrehungen in jeder Richtung optisch wahrnehmbar.

Zweckmäßigerweise sind die Mittel durch mindestens ein weiteres Sichtfenster sowie eine weitere Markierung am elektrischen Leiter ausgebildet. Vorzugsweise ist die Markierung im richtungsumkehrenden Abschnitt des elektrischen Leiters ausgebildet. Die Sichtfenster sind winkelversetzt in dem Deckel vorhanden.

Bevorzugt ist jedes Sichtfenster als sichelförmiges Segment ausgebildet. Durch diese besondere Formgebung des Sichtfensters ist eine sehr günstige optische Wahrnehmung der entsprechenden Markierung sichergestellt.

Um eine zuverlässige Übertragung einer Vielzahl von Signalen zu gewährleisten, sind drei weitere an die Anschlusseinheiten angeschlossene elektrische Leiter in einem Ringraum zwischen den beiden Gehäuseteilen vorgesehen, wobei alle Leiter parallel zueinander geschaltet sind. Zweckmäßigerweise ist das eine Gehäuseteil mit einer Nabe versehen, um die die elektrischen Leiter gewickelt sind.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

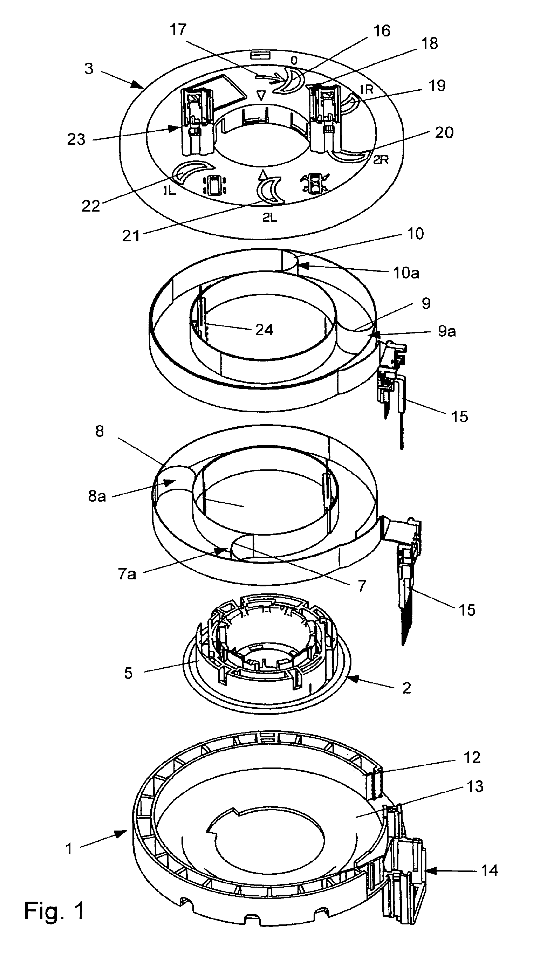

- Fig.1: eine Explosionsdarstellung der erfindungsgemäßen elektrischen Verbindungseinrichtung;
- Fig.2: einen Teilschnitt der Verbindungseinrichtung nach Fig. 1 und
- Fig. 3: einen weiteren Teilschnitt der Verbindungseinrichtung nach Fig. 1.

Die elektrische Verbindungseinrichtung umfasst ein Gehäuse, das im Wesentlichen durch zwei zueinander verdrehbare Gehäuseteile 1, 2 und einen das Gehäuse verschließenden Deckel 3 gebildet ist. Zwischen den Gehäuseteilen 1, 2 und dem Deckel 3 ist ein Ringraum zur Aufnahme von vier flexiblen elektrischen Leitern 7, 8, 9, 10 vorhanden, die jeweils als mehrere Strompfade umfassende Flachkabel ausgebildet und um eine Nabe 5 des Gehäuseteils 2 spiralförmig aufgewickelt sind. Innerhalb des Ringraumes weisen die Leiter 7 bis 10 richtungsumkehrende Abschnitte 7a bis 10a auf, die umfangsseitig gleichmäßig zueinander beabstandet angeordnet sind. Aufgrund der Länge der Leiter 7 bis 10 sind die beiden Gehäuseteile 1, 2 aus einer Neutralposition heraus sowohl im Uhrzeigersinn als auch im Gegenuhrzeigersinn um jeweils drei Umdrehungen zueinander verdrehbar.

Das Gehäuseteil 1 umfasst eine zylindrische Außenwandung 12, einen daran angeformten Bodenabschnitt 13 und einen sich im Bereich der Außenwandung 12 senkrecht zum Bodenabschnitt 13 in Freie erstreckenden Führungsabschnitt 14. Die Enden der Leiter 7 bis 10 sind zum einen mit einer Anschlusseinheit 15, die vom Führungsabschnitt 14 des Gehäuseteils 1 aufgenommen wird, und zum anderen mit einer einer deckelseitigen Führung 23 zugeordneten Anschlusseinheit 24 verbunden.

Die Leiter 7 bis 10 sind im Ringraum entlang der Außenwandung 12 spiralförmig in einer ersten Richtung gewickelt, weisen im weiteren Verlauf die richtungsumkehrenden Abschnitte 7a bis 10a auf und sind in einer zur ersten Richtung entgegengesetzten zweiten Richtung spiralförmig auf die Nabe 5 des Gehäuseteils 2 gewickelt.

Der Deckel 3 ist mit einem Sichtfenster 16 versehen, durch das jeder der richtungsumkehrenden Abschnitte 7a bis 10a gesehen werden kann, wenn sie in dieser Stellung präsent sind. Wenn sich die beiden Gehäuseteile 1, 2 in ihrer unverdrehten Neutralposition befinden, ist genau einer der richtungsumkehrenden Abschnitte 7a bis 10a in dem Sichtfenster 16 optisch zu erkennen.

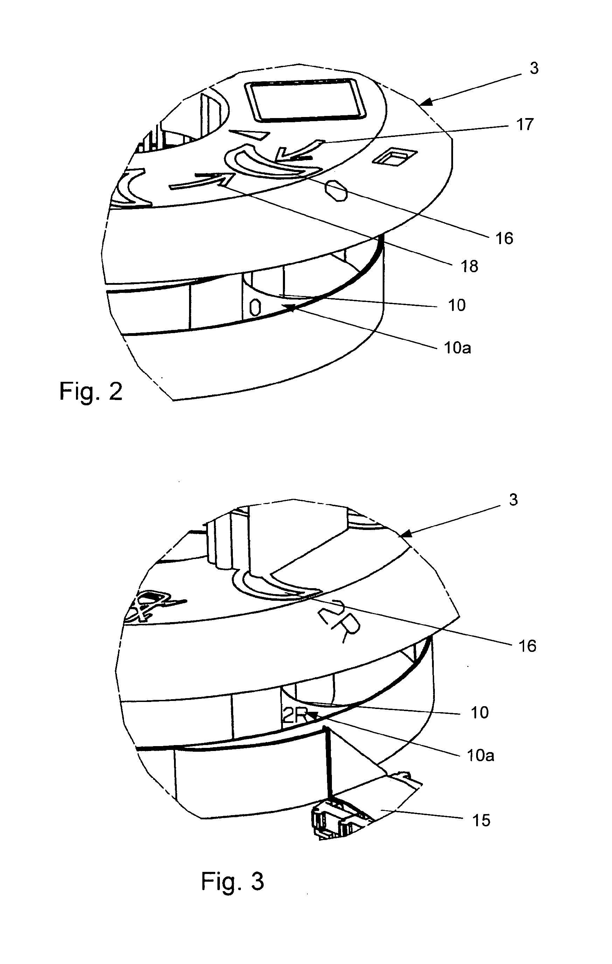

Als Neutralposition ist der Zustand bezeichnet, in dem die beiden Gehäuseteile 1, 2 gleich oft sowohl in der ersten Richtung, die dem Uhrzeigersinn entspricht, als auch in der zweiten Richtung, die dem Gegenuhrzeigersinn entspricht, zueinander verdreht werden können. Um einem Monteur der Verbindungseinrichtung eine sichere Erkennung der Neutralposition zu erleichtern, ist der richtungsumkehrende Abschnitt 10a mit einer nicht dargestellten Markierung versehen, die im Sichtfenster 16 in der Mitte zwischen zwei auf der Oberfläche des Deckelteils 3 angebrachten Pfeilen 17, 18, erscheint. Das Sichtfenster 16, das der eindeutigen Erkennung der Neutralposition dient, ist durch ein "0"-Zeichen kenntlich gemacht, das sich am äußeren Rand des Deckels 3 befindet. Die Neutralposition ist in größerem Maßstab in Fig. 2 dargestellt.

Im Deckel 3 sind neben dem Sichtfenster 16 für die Neutralposition weitere vier Sichtfenster 19, 20, 21, 22 winkelversetzt zueinander ausgebildet, die, genauso wie das Sichtfenster 16, eine sichelförmige Gestalt aufweisen. Den weiteren Sichtfenstern 19 bis 22 sind Zahlen-Buchstabenkombinationen 1R, 2R, 1L, 2L im Randbereich des Deckels 3 zugeordnet. Die weiteren Sichtfenster 19 bis 22 wirken mit den richtungsumkehrenden Abschnitten 7a bis 10a der elektrischen Leiter 7 bis 10 derart zusammen, dass, wenn einer der richtungsumkehrenden Abschnitte 7a bis 10a, beispielsweise 9a, im Sichtfenster 19 bzw. 1R, erscheint, eindeutig angezeigt wird, dass das eine Gehäuseteil 2 nach rechts, d.h., im Uhrzeigersinn, um eine Umdrehung zu dem anderen Gehäuseteil 1 verdreht ist. Im Allgemeinen gilt, dass die Zuordnung der richtungsumkehrenden Abschnitte 7a bis 10a zu den weiteren vier Sichtfenstern 19 - 22 derart getroffen ist, dass bei einer optischen Wahrnehmung eines der Abschnitte 7a - 10a in einem der Sichtfenster 19 - 22 erkannt werden kann, ob die Gehäuseteile 1, 2 eine Umdrehung nach rechts (19 - 1R), zwei Umdrehungen nach rechts (20 - 2R), eine Umdrehung nach links (22 - 1L) oder zwei Umdrehungen nach links (21 - 2L) zueinander verdreht sind. Die Position der genannten Komponenten bei der Erkennung von zwei Rechts-Umdrehungen (2R) ist in Fig. 3 gezeigt.

## Patentansprüche

1. Elektrische Verbindungseinrichtung zwischen einem Lenkrad und einem Lenkstockschaltermodul eines Kraftfahrzeuges, umfassend ein Gehäuse mit zwei relativ zueinander verdrehbaren Gehäuseteilen (1, 2), von denen eines mit einem das Gehäuse verschließenden Deckel (3) fest verbunden ist, mindestens einen spiralförmig mit einem richtungsumkehrenden Abschnitt (7a) im Gehäuse aufgewickelten, endseitig mit Anschlusseinheiten (15, 24) verbundenen flexiblen elektrischen Leiter (7) mit einer Markierung und einem Sichtfenster (16) im Deckel (3) zur Sichtung der Markierung des Leiters (7) zum Erkennen einer Neutralposition der Gehäuseteile (1, 2), **dadurch gekennzeichnet, dass** Mittel (7a, 8a, 9a, 10a, 19, 20, 21, 22) vorgesehen sind, die eine optische Erkennung mindestens einer Umdrehung der beiden Gehäuseteile (1, 2) relativ zueinander in mindestens einer Richtung ermöglichen.

2. Verbindungseinrichtung nach Anspruch 1, **dadurch gekennzeichnet, dass** die Mittel (7a, 8a, 9a, 10a, 20, 22) für jeweils zwei Umdrehungen (2R, 2L) in zwei entgegengesetzten Richtungen (R, L) vorgesehen sind.

3. Verbindungseinrichtung nach Anspruch 1 oder 2, **dadurch gekennzeichnet, dass** die Mittel durch mindestens ein weiteres Sichtfenster (19, 20, 21, 22) sowie eine weitere Markierung am elektrischen Leiter (7, 8, 9, 10) gebildet sind.

4. Verbindungseinrichtung nach Anspruch 3, **dadurch gekennzeichnet, dass** die Markierung im richtungsumkehrenden Abschnitt (7a, 8a, 9a, 10a) des elektrischen Leiters (7, 8, 9, 10) angeordnet ist.

5. Verbindungseinrichtung nach Anspruch 3 oder 4, **dadurch gekennzeichnet, dass** das Sichtfenster (16, 19, 20, 21, 22) als sichelförmiges Segment ausgebildet ist.

6. Verbindungseinrichtung nach einem der Ansprüche 1 bis 5, **dadurch gekennzeichnet, dass** drei weitere an die Anschlusseinheiten (15, 24) angeschlossene elektrische Leiter (8, 9, 10) in einem Ringraum zwischen den beiden Gehäuseteilen (1, 2) vorgesehen sind.

7. Verbindungseinrichtung nach Anspruch 6, **dadurch gekennzeichnet, dass** alle Leiter (7, 8, 9, 10) parallel zueinander geschaltet sind.

8. Verbindungseinrichtung nach einem der Ansprüche 1 bis 6, **dadurch gekennzeichnet, dass** das eine Gehäuseteil (2) mit einer Nabe (5) ausgeführt ist, um die die elektrischen Leiter (7, 8, 9, 10) gewickelt sind.
